# EUROPEAN PATENT APPLICATION

(11) **EP 2 930 672 A1**
(43) Date of publication of application: **14.10.2015**
(21) Application number: 15152320.6
(22) Date of filing: 23.01.2015
(51) Int. Cl.: G06Q 10/02, G06Q 20/32, G06Q 50/12

(54) **Gastronomy payment system using geotagging and mobile devices**

(30) Priority: 11.04.2014 US 201414251261
(71) Applicant: FUJITSU LIMITED, Kawasaki-shi, Kanagawa 211-8588 (JP)
(72) Inventor: MICHISHITA, Hiroshi, Sunnyvale, CA California 94085 (US); TOMONO, Mitsuru, Sunnyvale, CA California 94085 (US)
(74) Representative: Ward, James Norman

(57) **Abstract**

Methods and systems for gastronomy payment using geotagging and mobile devices may enable a user to browse and select restaurants using a mobile device, such as a smartphone. Menu items for a selected restaurant may be viewed and ordered after the user provides payment information to a gastronomy payment system, including authorization to charge the user for ordered menu items. The user may monitor a status of the order at the selected restaurant, which may receive a credit for the order from the gastronomy payment system. The gastronomy payment system may automatically charge the user for the order upon detecting that the user is no longer located at the restaurant. The gastronomy payment system may include a recommendation engine for recommending menu items based on user preferences or a history of ordered menu items.

## Description

### BACKGROUND

### Field of the Disclosure

The present disclosure relates to gastronomy payment systems and, specifically, to a gastronomy payment system using geotagging and mobile devices.

### Description of the Related Art

Conventional payment systems for gastronomy may involve inconveniences for patrons of a restaurant. For example, patrons of a restaurant may be forced to wait for service personnel to arrive and present the bill and take the payment. When a group orders at a restaurant, it may be troublesome and time-consuming to explain to the service personnel which items were ordered by which individuals in the group. Many consumers may desire to use a mobile device to search restaurants, order meals, and automatically make payments.

Therefore, there is a need in the art for a gastronomy payment system that is convenient to use with mobile devices, such as smartphones.

### SUMMARY

In one aspect, a disclosed method for gastronomy payment may include receiving, at a mobile device associated with a user, payment information for the user, including receiving authorization to charge the user for payment of menu items ordered by the user using the mobile device. The method may include presenting, on the mobile device, a list of restaurants, including a first restaurant. When the user selects the first restaurant, the method may include presenting, on the mobile device, a list of menu items available at the first restaurant, and receiving, at the mobile device, an order including a menu item from the list of menu items. The method may further include sending the order to the first restaurant, and receiving, from the first restaurant, a confirmation that the order was served to the user. Using the payment information, the method may also include charging the user for the order, and crediting the first restaurant for the order.

Additional disclosed aspects for gastronomy payment using geotagging and mobile devices include a computer-readable media.

### BRIEF DESCRIPTION OF THE DRAWINGS

FIG. 1 is a block diagram of selected elements of an embodiment of a gastronomy system for gastronomy payment using geotagging and mobile devices;
FIG. 2 is a block diagram of selected elements of an embodiment of a mobile device for gastronomy payment using geotagging and mobile devices;
FIG. 3 is a flowchart depicting selected elements of an embodiment of a method for gastronomy payment using geotagging and mobile devices; and
FIG. 4 is a block diagram of selected elements of an embodiment of a gastronomy payment system.

### DESCRIPTION OF PARTICULAR EMBODIMENT(S)

In the following description, details are set forth by way of example to facilitate discussion of the disclosed subject matter. It should be apparent to a person of ordinary skill in the field, however, that the disclosed embodiments are exemplary and not exhaustive of all possible embodiments.

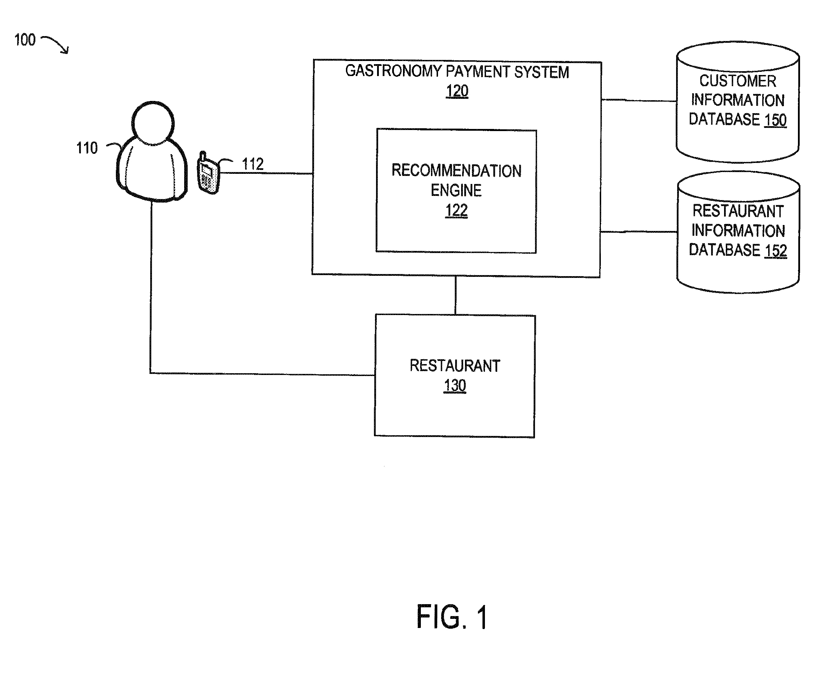

Turning now to the drawings, FIG. 1 is a block diagram showing selected elements of an embodiment of gastronomy system 100. As will be described in further detail, gastronomy system 100 may enable gastronomy payment using geotagging and mobile devices.

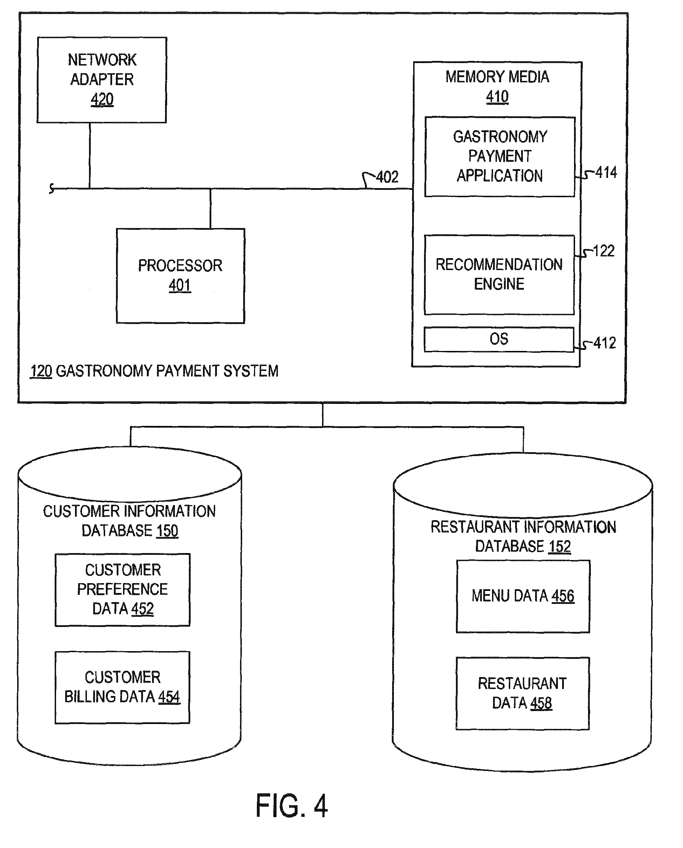

As shown in FIG. 1, gastronomy system 100 may include gastronomy payment system 120, which may provide services to mobile device 112 in possession of user 110. Specifically, gastronomy payment system 120 may host an application that, in conjunction with an app executing on mobile device 112, may enable user 110 to select restaurants, view and order menu items at selected restaurants, tender payment for ordered menu items using mobile device 112, split payments for orders at restaurants among groups of users. Furthermore, recommendation engine, shown included with gastronomy payment system 120 may provide recommendations for menu items based on previous orders generated using gastronomy payment system. In FIG. 1, restaurant 130 may represent any of a plurality of restaurants for whom restaurant information database 152 is populated with structured data (see also FIG. 4). As shown, gastronomy payment system 120 may also access customer information database 150 to store structured data for customers, such as user 110.

In operation of gastronomy system 100, restaurant 130 may desire to participate in gastronomy payment system 120 to obtain various benefits. For example, restaurant 130 may benefit from exposure to large numbers of potential customers by providing information to restaurant information database 152 and processing payments for ordered menu items offered by restaurant 130 using gastronomy payment system 120. Furthermore, restaurant 130 may benefit by accessing historical data for customers recorded using gastronomy payment system 120. Restaurant 130 may further reduce expenses and effort related to payment processing handled by gastronomy payment system 120. Accordingly, restaurant 130 may provide information to populate restaurant information database 152 such that restaurant 130 may participate as a vendor in gastronomy payment system 120, among a plurality of restaurants participating as vendors.

User 110 may also desire to obtain certain benefits by participating in gastronomy payment system 120. User 110 may gain the ability to use mobile device 112, such as a personal smartphone, to browse restaurants and menu offerings, and to order menu items, using gastronomy payment system 120 and mobile device 112. User 110 may gain the ability to monitor a progress of orders so as to reduce wait times for ordered items using gastronomy payment system 120. User 110 may further benefit from recommendations provided based on either historical consumption data for user 110 and/or preferences provided by user 110 that are generated by recommendation engine of gastronomy payment system 120. Accordingly, user 110 may create an account with gastronomy payment system 120 and provide payment information as well as authorization to charge ordered menu items using the payment information. Gastronomy payment system 120 may store the information provided by user 110 in customer information database 150, along the similar information for a plurality of other users.

Then, user 110 may browse various restaurants, including restaurant 130, appearing as vendors in gastronomy payment system 120 by using an app on mobile device 112. The user may select restaurant 130 and may accordingly browse menu offerings for restaurant 130. The user may then select menu items to add to an order for restaurant 130. The order for restaurant 130 may be placed independent of location, either in advance of arriving at restaurant 130, or while user 110 is within the premises of restaurant 130. After placing the order, user 110 may monitor the progress of the order and may receive status information that may be relayed from restaurant 130 via gastronomy payment system 120 to mobile device 112. Then, restaurant 130 may fulfill the order by serving the ordered menu items to user 110 and may correspondingly provide an indication to gastronomy payment system 120 that the order has been served. After the indication from restaurant 130 has been received by gastronomy payment system 120, user 110 may be charged for the ordered items. In one embodiment, user 110 may be charged in response to receiving a command from mobile device 112. In another embodiment, user 110 may be charged after mobile device 112 automatically detects, using location information, that user 110 is no longer at a location corresponding to the premises of restaurant 130. Then, restaurant 130 may receive a credit for the order from gastronomy payment system 120.

In certain embodiments, user 110 may be in a party of several individuals (not shown), who themselves are registered users of gastronomy payment system 120. The order may include menu items for each individual, respectively. In such instances of group orders, gastronomy payment system 120 may enable automatic payments for each individual in the group in a substantially similar manner as described above with respect to user 110.

Furthermore, when user 110 browses menu items for restaurant 130, recommendation engine 122 may generate suggested menu items to comply with user preferences or with user historical orders. Recommendation engine 122 may generate such recommendations based on calorie information for a menu item, nutrient information for a menu item, allergy information for a menu item, and/or an image for a menu item.

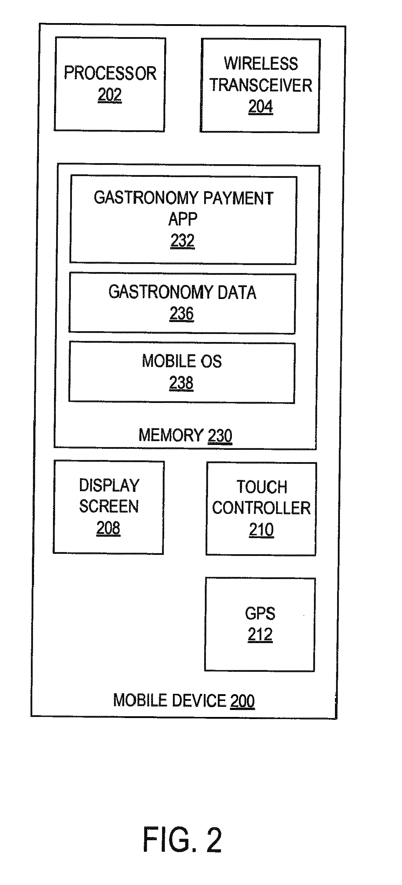

Referring now to FIG. 2, a block diagram of selected elements of an embodiment of mobile device 200 is depicted. Mobile device 200 may represent an embodiment of mobile device 112 (see FIG. 1) in which further elements and additional detail is depicted.

Specifically, mobile device 200 may represent any of a variety of mobile devices with communication and data processing capability. In various embodiments, mobile device 200 is a smartphone that may include various functionality selected from: cellular telephony, wireless networking, location sensing, motion sensing, digital imaging (*i.e.,* a camera), touch screen operation, multimedia playback, data storage, among others. Accordingly, while certain aspects of mobile device 200 are shown in FIG. 2 for descriptive purposes, it will be understood that, in different embodiments, mobile device 200 may include different types of functionality.

As shown in FIG. 2, mobile device 200 includes processor 202 and memory 230 that may store data and/or instructions executable by processor 202. Memory 230 is shown including mobile OS 238, which may represent a mobile operating system being executed by processor 202. Examples of instances of mobile OS 238 include iOS (Apple Inc.) and Android™ (Google Inc.). Also, memory 230 may store gastronomy payment app 232 that is executable by processor 202 to enable gastronomy payment functionality, as described herein. Memory 230 may also store gastronomy data 236, that may include location data for a user (not shown in FIG. 2, see FIG. 1) of mobile device 200, as well as other data, as described herein. The location data may be generated using mobile device 200. It is noted that various apps executing on mobile device 200 may be configured to access diverse types of functionality included with mobile device 200, such as, but not limited to, imaging, communication, location-based services, gestures, touch input, motion of mobile device 200, Internet-connectivity, etc.

In FIG. 2, mobile device 200 may include at least one instance of wireless transceiver 204, which may provide wireless connectivity to various types of wireless networks, such as cellular telephony networks (*e.g.,* 3G, 4G, LTE), wireless local area networks (*e.g.,* IEEE 802.11), wireless personal area networks (*e.g*., Bluetooth®), among others. Display screen 208 and touch controller 210 may operate in combination to provide a touch-screen display for output to and control by the user. Mobile device 200 is also shown including at least one instance of GPS 212, which may be used to generate location data.

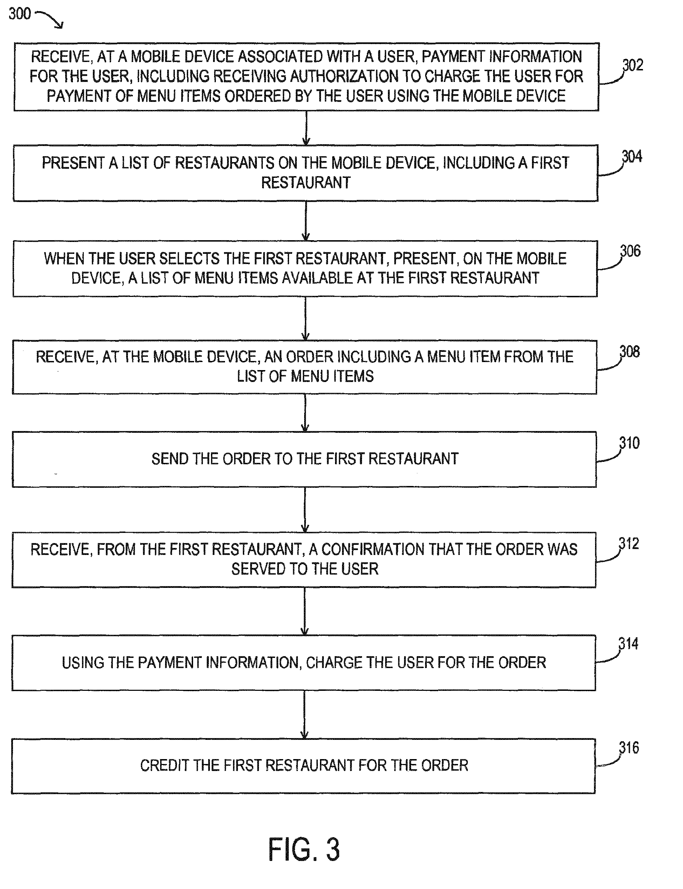

Turning now to FIG. 3, a block diagram of selected elements of an embodiment of method 300 for gastronomy payment using geotagging and mobile devices is depicted in flowchart form. Method 300 may be performed by gastronomy payment app 232 at mobile device 200 (see FIG. 2), for example, in conjunction with customer information database 150 (see FIG. 1). It is noted that certain operations described in method 300 may be optional or may be rearranged in different embodiments.

Method 300 may begin by receiving (operation 302), at a mobile device associated with a user, payment information for the user, including receiving authorization to charge the user for payment of menu items ordered by the user using the mobile device. A list of restaurants may be presented (operation 304) on the mobile device, including a first restaurant. When the user selects a first restaurant, a list of menu items available at the first restaurant may be presented (operation 306) on the mobile device. An order including a menu item from the list of menu items may be received (operation 308) at the mobile device. The order may be sent (operation 310) to the first restaurant. The order may be forwarded in operation 310 by the mobile device to gastronomy payment system 120 (see FIG. 1), which, in turn, may forward the order the first restaurant. Then, a confirmation may be received (operation 312) from the first restaurant that the order was served to the user. Using the payment information, the user may be charged

(operation 314) for the order. Finally, the restaurant may be credited (operation 316) for the order.

Referring now to FIG. 4, a block diagram showing selected elements of an embodiment of gastronomy payment system 120 is illustrated. As depicted in FIG. 4, gastronomy payment system 120 includes processor 401 and memory media 410, which may communicate using system bus 402. Also shown accessible via system bus 402 is network adapter 420 that may provide connectivity to a network.

As shown in FIG. 4, memory media 410 may represent volatile, non-volatile, fixed, and/or removable media, and may be implemented using magnetic and/or semiconductor memory. Memory media 410 is capable of storing instructions and/or data. As shown, memory media 410 stores instructions (*i.e.,* code executable by processor 401) including operating system (OS) 412, gastronomy payment application 414, and recommendation engine 122. Operating system 412 may be any of a variety of operating systems, such as a UNIX variant, LINUX, a Microsoft Windows® operating system, or a different operating system. Gastronomy payment application 414 and recommendation engine 122 may embody various applications and functionality for gastronomy payment as described herein, for example, as described with respect to FIG. 1. Also shown in FIG. 4 is customer information database 150, which may be hosted by gastronomy payment system 120 for providing structured data storage. Customer information database 150 may store customer preference data 452 and customer billing data 454 for a plurality of users. It is noted that, in certain embodiments, customer information database 150 may be included with gastronomy payment system 120. Also shown in FIG. 4 is restaurant information database 152, which may be hosted by gastronomy payment system 120 for providing structured data storage. Restaurant information database 152 may store menu data 456 and restaurant data 458 for a plurality of restaurants, as described previously. It is noted that, in certain embodiments, restaurant information database 152 may be included with gastronomy payment system 120.

As disclosed herein, methods and systems for gastronomy payment using geotagging and mobile devices may enable a user to browse and select restaurants using a mobile device, such as a smartphone. Menu items for a selected restaurant may be viewed and ordered after the user provides payment information to a gastronomy payment system, including authorization to charge the user for ordered menu items. The user may monitor a status of the order at the selected restaurant, which may receive a credit for the order from the gastronomy payment system. The gastronomy payment system may automatically charge the user for the order upon detecting that the user is no longer located at the restaurant. The gastronomy payment system may include a recommendation engine for recommending menu items based on user preferences or a history of ordered menu items.

The above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. A method for gastronomy payment, comprising:
receiving, at a mobile device associated with a user, payment information for the user, including receiving authorization to charge the user for payment of menu items ordered by the user using the mobile device;
presenting, on the mobile device, a list of restaurants, including a first restaurant;
when the user selects the first restaurant, presenting, on the mobile device, a list of menu items available at the first restaurant;
receiving, at the mobile device, an order including a menu item from the list of menu items;
sending the order to the first restaurant;
receiving, from the first restaurant, a confirmation that the order was served to the user;
using the payment information, charging the user for the order; and
crediting the first restaurant for the order.

2. The method of claim 1, wherein the order includes respective menu items for each of a plurality of users, and further comprising:
charging each of the plurality of users for a respective menu item included in the order.

3. The method of claim 1 or 2, wherein charging the user for the order is performed responsive to receiving location information for the mobile device indicating that the user is no longer at the restaurant.

4. The method of claim 1 or 2, wherein charging the user for the order is performed responsive to receiving a command from the mobile device to pay for the order.

5. The method of any of claims 1 to 4, after receiving the order, further comprising:
receiving status information for the order from the first restaurant; and
presenting the status information on the mobile device.

6. The method of any of claims 1 to 5, further comprising:
based on previous menu items ordered by the user, recommending a menu item from the list of menu items to the user.

7. The method of any of claims 1 to 5, further comprising:
based on menu preferences for the user, recommending a menu item from the list of menu items to the user.

8. Non-transitory computer-readable media storing processor-executable instructions for gastronomy payment, the instructions, when executed by a processor of a mobile device associated with a user, for causing the processor to:
receive, at the mobile device, payment information for the user, including receiving authorization to charge the user for payment of menu items ordered by the user using the mobile device;
present a list of restaurants on the mobile device, including a first restaurant;
when the user selects the first restaurant, present, on the mobile device, a list of menu items available at the first restaurant;
receive, at the mobile device, an order including a menu item from the list of menu items;
send the order to the first restaurant;
receive, from the first restaurant, a confirmation that the order was served to the user;
using the payment information, charge the user for the order; and
credit the first restaurant for the order.

9. The computer-readable media of claim 8, wherein the order includes respective menu items for each of a plurality of users, and further comprising instructions to:
charge each of the plurality of users for a respective menu item included in the order.

10. The computer-readable media of claim 8 or 9, wherein the instructions to charge the user for the order are performed responsive to receiving location information for the mobile device indicating that the user is no longer at the restaurant.

11. The computer-readable media of claim 8 or 9, wherein the instructions to charge the user for the order are performed responsive to receiving a command from the mobile device to pay for the order.

12. The computer-readable media of any of claims 8 to 11, after executing the instructions to receive the order, further comprising instructions to:
receive status information for the order from the first restaurant; and
present the status information on the mobile device.

13. The computer-readable media of any of claims 8 to 12, further comprising instructions to:
based on previous menu items ordered by the user, recommend a menu item from the list of menu items to the user.

14. The computer-readable media of any of claims 8 to 12, further comprising instructions to:
based on menu preferences for the user, recommend a menu item from the list of menu items to the user.

15. The method of any of claims 1 to 7 or the computer-readable media of any of claims 8 to 14, wherein the list of menu items includes at least one of:
calorie information for a menu item;
nutrient information for a menu item;
allergy information for a menu item; and
an image for a menu item.
